# EUROPEAN PATENT APPLICATION

(11) **EP 3 462 446 A1**
(43) Date of publication of application: **03.04.2019**
(21) Application number: 17193700.6
(22) Date of filing: 28.09.2017
(51) Int. Cl.: G10L 15/26, G06F 17/21, G10L 15/22, G10L 25/21

(54) **METHOD, DEVICE AND COMPUTER PROGRAM FOR SPEECH-TO-TEXT CONVERSION**

(71) Applicant: Vestel Elektronik Sanayi ve Ticaret A.S., 45030 Manisa (TR)
(72) Inventor: SARIARSLAN,, Muhammet Kürsat, 45030 Manisa (TR)
(74) Representative: Flint, Adam

(57) **Abstract**

A method of speech-to-text conversion is carried out by a computing device (10). Speech is received at the computing device (10), e.g. via a microphone (18). The received speech is converted to text. At least some of the text is formatted in accordance with the volume of the received speech.

## Description

### Technical Field

The present disclosure relates to a method, device and computer program for speech-to-text conversion.

### Background

Many speech-to-text conversion or speech recognition systems are known. In such systems, it is typically not possible for the speaker (the user) to specify particular formatting that should be applied to any of the text when speaking the text. At best, formatting of text in known speech-to-text conversion systems can only be achieved in an inconvenient or disruptive manner. For example, in some systems the speaker has to laboriously dictate the formatting to be used (for example, by saying "open underline, 'spoken word', close underline" in which "spoken word" is the text that is to be underlined). In other systems, the user has to go over the produced text manually to add formatting by hand after the text has been produced and output to some text editor program.

### Summary

According to a first aspect disclosed herein, there is provided a method of speech-to-text conversion carried out by a computing device, the method comprising:
receiving speech;
converting the received speech to text; and
formatting at least some of the text in accordance with the volume of the received speech.

In this way, the user can easily and simply indicate the required formatting for the text by delivering the speech to the computing device at different volumes.

In an example, the method comprises:
segmenting the received speech to identify at least different words in the received speech;
determining the volume for at least one of the different words in the received speech; and
formatting the at least one of the different words in accordance with the volume for the at least one of the different words in the received speech.

As one example to illustrate this, in an example the user may say the word "shout" particularly loudly when speaking into a computing device, and the word "shout" will be capitalised as "SHOUT" in the text that is output by the computing device. Other text may be in lower case (other than for example at the start of sentences, where the initial letter of the initial word of the sentence may be capitalised automatically, as is common in word processing and speech-to-text conversion systems).

In an example, the method comprises applying a formatting to at least some of the text if the volume of the received speech is above a threshold. As one example, the formatting may be to put the relevant text in all capital letters.

In an example, the method comprises applying a second formatting to at least some of the text if the volume of the received speech is below the threshold. As one example, the second formatting may be for example to put the relevant text in bold or italics or underlined, etc.

In an example, the method comprises applying the second formatting to at least some of the text if the volume of the received speech is below the first threshold and above a second threshold, and applying a third formatting to at least some of the text if the volume of the received speech is below the second threshold. As one example to illustrate this, in an example if the volume of a word in the received speech is below the first (maximum) threshold and above a second threshold, then the word may be put in all capitals; if the volume of a word in the received speech is above the first (maximum) threshold, then the word may be put in all capitals and bold, or all capitals and a different colour font such as red, etc.; if the volume of a word in the received speech is below the second threshold, then a third formatting, which may be no formatting, may be applied to the word.

In an example, the formatting is to put the text in capital letters throughout.

According to a second aspect disclosed herein, there is provided a computing device for speech-to-text conversion, the computing device comprising a processor, the processor being configured to:
receive speech;
convert the received speech to text; and
format at least some of the text in accordance with the volume of the received speech.

According to a third aspect disclosed herein, there is provided a computer program comprising instructions such that when the computer program is executed on a computing device, the computing device is arranged to:
receive speech;
convert the received speech to text; and
format at least some of the text in accordance with the volume of the received speech.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:

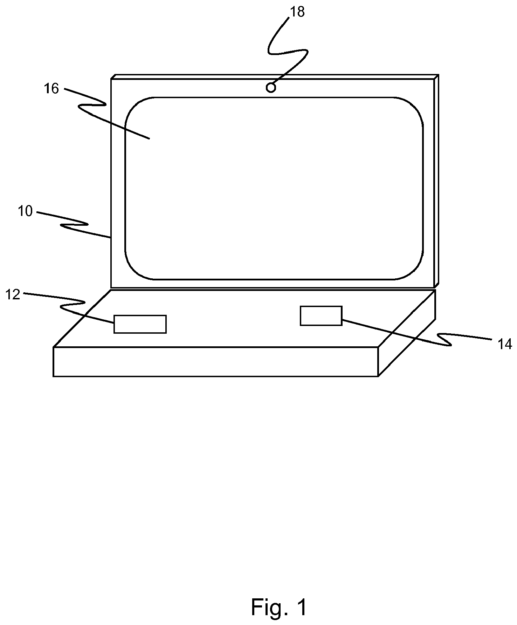

Figure 1 shows schematically an example of a computing device for speech-to-text conversion.

### Detailed Description

In Figure 1, there is shown schematically an example of a computing device 10 for speech-to-text conversion as described herein. The computing device 10 is shown as a laptop computer. However, in general, the computing device 10 may be of any type, including for example a desktop or laptop or tablet computer, a cellular phone (including a so-called "smart phone"), etc., etc.

The computing device 10 has a processor 12, data storage 14, etc. as conventional. The processor 10 runs software which may be stored in the data storage 14. The software in this example includes a computer program for speech-to-text conversion as described herein.

The computing device 10 further has a display screen 16. The computing device 10 has a microphone 18. Each of the display screen 16 and the microphone 18 may be provided integrally with the computing device 10 or as separate components that are connected to the computing device 10.

The computing device 10 when running the computer program for speech-to-text conversion is able to receive speech spoken by a user via the microphone 18. The computing device 10 carries out speech-to-text conversion on the received speech. In this regard, the term "text" is used broadly in this specification, and includes for example words, letters, numbers (whether represented as digits, such as "1", or as the word, such as "one"), etc. The term "text" is also often used synonymously with "word" in the present specification. Speech-to-text conversion is well known of itself and many systems and specific techniques for achieving this are known. Such systems typically use some form of speech recognition and may use natural language processing. The computing device 10 may segment the received speech to identify different words in the received speech. Speech segmentation is the process of identifying the boundaries between words, syllables, or phonemes in spoken natural languages, and can be used herein to help identify the specific spoken words in the received speech.

When speech from a user is received at the computing device 10 via the microphone 18, the computing device 10 processes the received speech and generates a digital output for the text contained in the speech. That is, the text is output as digital content, often in the form of a text file or some file that is suitable for a particular word processing program.

At the same time as receiving the speech, the computing device 10 also obtains a measure of the volume of the speech. The volume of the speech may be recorded substantially continuously as the speech is received at the computing device 10. Moreover, the computing device 10 may keep a record of the volume of the speech at each particular time instant of the speech. In this example, therefore, the computing device 10 is able to link particular text that is output by the computing device 10 with the volume of that particular text in the speech that was received at the computing device 10. The volume of the received speech only needs to be stored by the computing device 10 until the received speech and the resultant output text have been processed as described herein, which helps to minimise data storage requirements for the computing device 10.

Having produced text from the received speech, the computing device 10 determines the volume of the received speech relating to that text. In one example, this may be carried out on a word-by-word basis. This may be carried out contemporaneously with the production of the text from the received speech, that is effectively on-the-fly during the speech-to-text conversion.

From the volume of a particular word in the received speech, the computing device 10 determines whether or not to format the particular word. Again, this may be carried out contemporaneously with the production of the text from the received speech.

A number of arrangements for the formatting that is applied and the criteria for applying the formatting are possible.

As one example, there may be just one type of formatting that is available (at least at any particular time), and this may be applied if the volume for the particular word was above a threshold. As one example to illustrate this, in an example the user may say the word "shout" particularly loudly when speaking into the computing device 10, and the word "shout" will be capitalised as "SHOUT" in the text that is output by the computing device 10. A different or compound formatting may be applied, such as bold, or all italics and bold, or using a particular different colour for the font. The computing device 10 may provide the user with options for setting the default formatting that is applied.

In another example, the computing device 10 may operate a number of thresholds for the volume of the received speech and may apply different formatting according to volume. As one example to illustrate this, if the volume of a word in the received speech is above a maximum threshold, then the word may be capitalised or in bold throughout say; if the volume of a word in the received speech is below the maximum threshold and above a minimum threshold, then no formatting is applied; and if the volume of a word in the received speech is below the minimum threshold, then the word may be put in italics. As another example, if the volume of a word in the received speech is above a first threshold, then the word may be put in all capitals, and if the volume of a word in the received speech is above a second threshold that is higher than the first threshold, then a second additional formatting may be applied, such as to put the word in all capitals and bold, or all capitals and a different colour font such as red, etc.; a third formatting, which may be no formatting, may be applied to words having a volume that is below the first (lower) threshold. Other examples and variations along these lines will be clear. The computing device 10 may again provide the user with the option to vary the default formatting that is applied in dependence on the plural thresholds.

In an example, instead of for example going through each word in the text and assessing from the volume of the speech for that word what formatting if any should be applied to the word, the computing device 10 may be arranged only to record volume for a particular time instant or word in the received speech if the volume is above a threshold. In that case, the chosen formatting may be applied only to those words spoken with a volume recorded as being above the threshold, and a default or no formatting is applied to other words for which no volume was recorded as it was below the threshold. This may be extended for the case where there are a number of thresholds for different formatting.

The computing device 10 may provide the user with a training or configuration option. During this training or configuration phase, the user may for example be prompted to speak into the microphone 18 of the computing device 10 at a number of different volume levels so that the computing device 10 can learn the range of volume used by the user. As another example, the user maybe prompted to speak at a volume that the user will use to indicate a specific formatting. So, for example, the user may be prompted to speak at a particular volume when wanting to specify that the word should be in all capitals throughout or is to be formatted with bold. The computing device 10 records that volume and then applies the selected formatting accordingly during the speech-to-text conversion as discussed above. The training phase may involve the user speaking a number of times at the desired volume so that the computing device 10 can take an average. As another example, particularly when there is just one threshold used for one type of formatting, the computing device 10 may prompt the user to speak alternately at loud and quiet volumes a number of times so that the computing device 10 can determine a suitable threshold.

Moreover, the computing device 10 may be arranged so as to automatically adjust the one or more thresholds depending on the ambient noise. For example, if the ambient noise is relatively loud, the user will typically speak into the microphone 18 of the computing device 10 more loudly. Accordingly, the computing device 10 may be arranged to raise the one or more thresholds for the volume if the ambient noise is louder and to lower the one or more thresholds for the volume if the ambient noise is quieter.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of speech-to-text conversion carried out by a computing device, the method comprising:
receiving speech;
converting the received speech to text; and
formatting at least some of the text in accordance with the volume of the received speech.

2. A method according to claim 1, comprising:
segmenting the received speech to identify at least different words in the received speech;
determining the volume for at least one of the different words in the received speech; and
formatting the at least one of the different words in accordance with the volume for the at least one of the different words in the received speech.

3. A method according to claim 1 or claim 2, comprising applying a formatting to at least some of the text if the volume of the received speech is above a threshold.

4. A method according to claim 3, comprising applying a second formatting to at least some of the text if the volume of the received speech is below the threshold.

5. A method according to claim 4, comprising applying the second formatting to at least some of the text if the volume of the received speech is below the first threshold and above a second threshold, and applying a third formatting to at least some of the text if the volume of the received speech is below the second threshold.

6. A method according to any of claims 1 to 5, wherein the formatting is to put the text in capital letters throughout.

7. A computing device for speech-to-text conversion, the computing device comprising a processor, the processor being configured to:
receive speech;
convert the received speech to text; and
format at least some of the text in accordance with the volume of the received speech.

8. A computing device according to claim 7, the processor being configured to:
segment the received speech to identify at least different words in the received speech;
determine the volume for at least one of the different words in the received speech; and
format the at least one of the different words in accordance with the volume for the at least one of the different words in the received speech.

9. A computing device according to claim 7 or claim 8, the processor being configured to:
apply a formatting to at least some of the text if the volume of the received speech is above a threshold.

10. A computing device according to claim 9, the processor being configured to:
apply a second formatting to at least some of the text if the volume of the received speech is below the threshold.

11. A computing device according to claim 10, the processor being configured to:
apply the second formatting to at least some of the text if the volume of the received speech is below the first threshold and above a second threshold, and apply a third formatting to at least some of the text if the volume of the received speech is below the second threshold.

12. A computer program comprising instructions such that when the computer program is executed on a computing device, the computing device is arranged to:
receive speech;
convert the received speech to text; and
format at least some of the text in accordance with the volume of the received speech.

13. A computer program according to claim 12, the processor being configured to:
segment the received speech to identify at least different words in the received speech;
determine the volume for at least one of the different words in the received speech; and
format the at least one of the different words in accordance with the volume for the at least one of the different words in the received speech.

14. A computer program according to claim 12 or claim 13, the processor being configured to:
apply a formatting to at least some of the text if the volume of the received speech is above a threshold.

15. A computer program according to claim 14, the processor being configured to:
apply a second formatting to at least some of the text if the volume of the received speech is below the threshold.
